# EUROPEAN PATENT APPLICATION

(11) **EP 3 324 655 A1**
(43) Date of publication of application: **23.05.2018**
(21) Application number: 16306499.1
(22) Date of filing: 17.11.2016
(51) Int. Cl.: H04W 4/00, G06F 21/77, H04W 12/06, H04L 29/06, H04W 8/18, G06F 9/445

(54) **METHOD FOR MANAGING A PATCH OF A SOFWARE COMPONENT IN A EUICC**

(71) Applicant: Gemalto SA, 92190 Meudon (FR)
(72) Inventor: LABOURIE, Florent, 13881 Gemenos Cedex (FR); YANTO, Rudy, 13881 Gemenos Cedex (FR)

(57) **Abstract**

The invention is a method for managing a patch of a software package in a secure element comprising several subscription profiles. The patch is installed on the secure element and no more than one of said subscription profiles is enabled at a time. The method comprises the steps of:
- on receipt of an activation command, recording a description of a link that attaches the patch only to a target subscription profile,
- enabling the patch for the software package either as soon as the target subscription profile becomes enabled or as soon as the description is recorded if the target subscription profile is already enabled.

## Description

### (Field of the invention)

The present invention relates to methods of managing a patch of a package. It relates particularly to methods of managing patches of software packages stored in a secure element which is able to manage a plurality of subscription profiles.

### (Background of the invention)

Secure elements can be small devices comprising a memory, a microprocessor and an operating system for computing treatments. Such secure elements may comprise a plurality of memories of different types, like non-volatile memory and volatile memory. They are called "secure" because they are able to control the access to the data they contain and to authorize or not the use of data by other machines or entities. Secure elements may also provide computation services based on cryptographic components. In general, secure elements have limited computing resources and limited memory resources and they are intended to be connected to a host machine which provides them with electric power. Secure elements may be removable or fixed to a host machine. For example, smart cards and embedded Universal Integrated Circuit Cards (eUICC) are a kind of secure elements.

The operating system of the secure element may be developed as a package or a set of packages which is stored into the secure element.

A secure element may contain several subscription profiles. Each subscription profile comprises all data required to access services allocated to the subscription. These subscription profiles are managed as separated and independent containers which are run above the operating system layer. In most of the existing secure elements, no more than one subscription profile can be enabled (i.e. activated) at a time. Such configuration allows to reproduce the behavior of legacy secure elements which comprise a single subscription profile like a SIM card or a banking card for example. The enabled subscription profile is called the current profile.

When a patch is installed for a package of the operating system, this patch applies whatever the current profile is.

There is a need for allowing a selective consideration of a patch according to the current subscription profile in a secure element.

### (Summary of the Invention)

An object of the invention is to solve the above mentioned technical problem.

An object of the present invention is a method for managing a patch of a software package in a secure element comprising first and second subscription profiles. The patch is installed on the secure element. No more than one of said first and second subscription profiles is enabled at a time. The software package is enabled independently of said first and second subscription profiles. The method comprises the following steps:
- on receipt of an activation command, recording a description of a link that attaches the patch only to said first subscription profile,
- enabling the patch for said software package either as soon as said first subscription profile becomes enabled or as soon as said description is recorded if said first subscription profile is already enabled.

Advantageously, the method may comprise the further steps:
- enabling said second subscription profile,
- disabling the patch only if the patch is not attached to said second subscription profile, said disabling step being triggered by the step of enabling said second subscription profile.

Advantageously, the method may comprise the step of installing a new patch on the secure element and the step of recording a second description of a second link that attaches the new patch to said first subscription profile only.

Advantageously, the method may comprise the step of installing a third subscription profile on the secure element. The installing step may include a sub step of recording a third description of a third link that attaches the patch to said third subscription profile.

Advantageously, the sub step of recording the third description of the third link may be carried out by storing a link reference in a storage area uniquely allocated to said third subscription profile.

Another object of the invention is a secure element comprising a processor, a software package and a patch of the software package. The secure element is intended to comprise first and second subscription profiles. No more than one of said first and second subscription profiles is enabled at a time. The software package is enabled independently of said first and second subscription profiles. The secure element comprises a first agent adapted to be run by the processor for, on receipt of an activation command, recording a description of a link that attaches the patch only to said first subscription profile. The secure element comprises a second agent adapted to be run by the processor for enabling the patch for said software package either as soon as said first subscription profile becomes enabled or as soon as said description is recorded if said first subscription profile is already enabled.

Advantageously, the second agent may be adapted to be run by the processor for disabling the patch as soon as said second subscription profile becomes enabled and only if the patch is not attached to the second subscription profile.

Advantageously, the second agent may be adapted to retrieve the description of the link from a storage area uniquely allocated to said first subscription profile.

Advantageously, the second agent may be adapted to retrieve the description of the link from a storage area common to said first and second subscription profiles.

Advantageously, the secure element may comprise a Link Object. The software package may include a permanent pointer to the Link Object and the Link Object may include at least a dynamic pointer which is set to point to the patch only if the patch is enabled for said software package.

### (Brief description of the drawings)

Other characteristics and advantages of the present invention will emerge more clearly from a reading of the following description of a number of preferred embodiments of the invention with reference to the corresponding accompanying drawings in which:
- Figures 1-4 show several flow diagrams of a patch management according to as many examples of the invention,
- Figure 5 depicts schematically an architecture of a secure element according to an example of the invention,
- Figures 6 and 7 depict schematically configurations of a secure element according to other examples of the invention,
- Figure 8 depicts schematically an example of two patches enabled for a software package according to the invention, and
- Figure 9 depicts schematically an example of a software package without enabled patch according to the invention.

### (Detailed description of the preferred embodiments)

The invention may apply to any type of secure element intended to manage a plurality of independent subscription profiles. The invention is well suited for secure elements comprising a virtual machine like a Javacard ® virtual machine for example.

Such secure elements may be coupled to a host machine like a smartphone, a tablet, a personal computer, a smart watch, a vehicle, a meter, a slot machine, a TV or a computer for example.

In the present description, the word package means a set of individual files, data or resources which are packed together as a software collection that provides certain features or services. For instance a package may contain executable code and static parameters.

The invention applies to packages as defined in object-oriented programming languages (like Java® for instance) but also to any other programming languages like C, Assembler or a script language.

An advantage of the invention is to allow the selective enabling of a patch for any common part of the secure element (i.e. not only a patch of the operating system as such). For example a patch may be enabled for an additional package providing services to all subscription profiles installed on the secure element. For instance the additional package may be in charge of the management of the communication session with entities outside of the secure element.

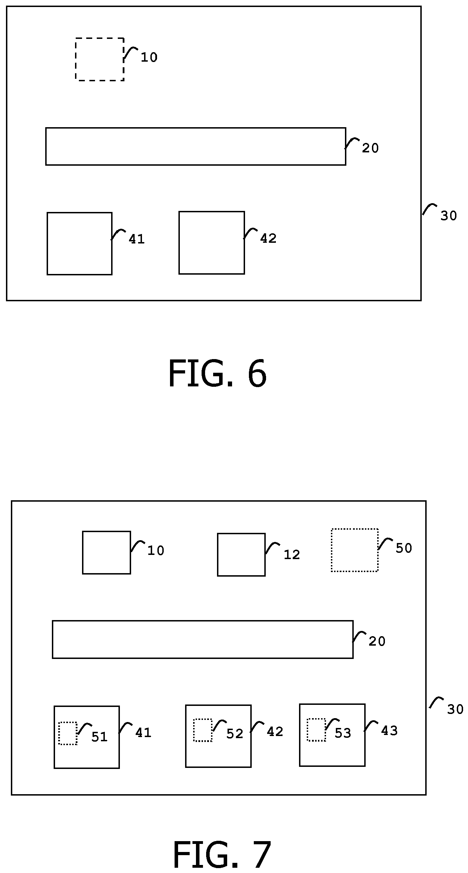

**Figure 6** shows schematically a configuration of a secure element according to an example of the invention.

In this embodiment, the secure element 30 is a eUICC which comprises a software package 20 that is part of its operating system. The secure element 30 comprises a subscription profile 41 which corresponds to a professional Telecom subscription and a subscription profile 42 which corresponds to a private Telecom subscription. Figure 6 shows the patch 10 in dashed line to reflect the fact that the patch can be loaded in the secure element 30.

The subscription profile 41 and 42 may be implemented through Issuer Security Domain Profile (ISD-P) as defined by GSMA SGP.22 RSP Technical Specification v2.0 (e.g. they may be Mobile Network Operator Security Domains named MNO-SD) or any relevant container mechanism allowing to manage a secure partitioning of the profiles.

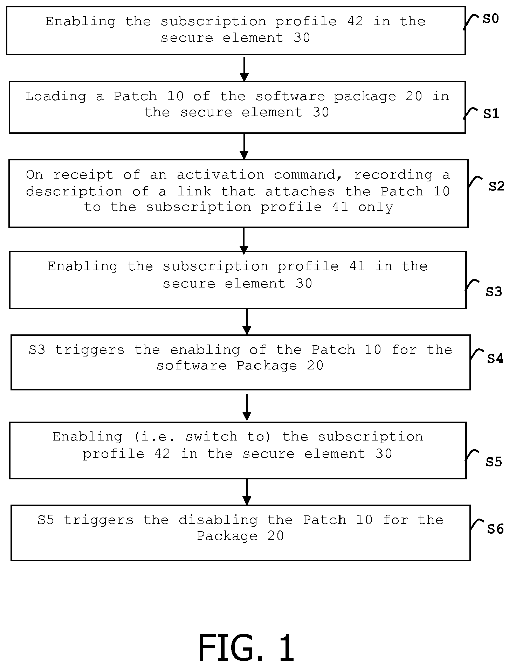

**Figure 1** shows a flow diagram of a patch management according to a first example of the invention.

Based on the secure element 30 presented at Figure 6, the subscription profile 42 is enabled at step S0. Thus the profile 42 becomes the active profile (or current profile) running on the secure element 30.

At step S1, a patch 10 of the software package 20 is downloaded in the secure element 30. In general secure elements may be accessed by a remote server via a wireless channel or through a wired network, like Internet for instance. For example, secure elements which are intended to be used in Telecom domain or Machine-To-Machine (M2M) domain are able to manage an OTA (Over-The-Air) channel. These secure elements may also be accessed through the HyperText Transfer Protocol, usually called HTTP or HTTPS for the secure mode. Thus, a distant server can remotely manage the content of a secure element like an UICC (Universal Integrated Circuit Card) through a dedicated communication session using a specific protocol. For example, the server may use the RAM (Remote Applet Management) mechanism as defined by GlobalPlatform ® v 2.2 standard - Amendment B "RAM over HTTP" or the OMA-DM (Open Mobile Alliance - Device Management) protocol as defined by OMA-TS-DM V1.2.1 standard.

Thus an administration server can remotely administrate the content of the secure element and send a new patch of a package.

At this point, the patch 10 remains disabled (i.e. inactive / not used) and it is not applied to the soft package 20 whatever the current subscription profile.

Then the administration server sends to the secure element 30 an activation command aiming at activating the patch for the profile 41 only. For instance, the activation command may be based on the Store data or Put data commands as described by GlobalPlatform Card Specification Version 2.2.1 with a customized parameter. Alternatively, the activation command may be independent of existing standards. For instance, the activation command may have two parameters: the identifier of the subscription profile 41 and the identifier of the patch 10. On receipt of the activation command, the secure element 30 records a description of a link that attaches the patch 10 to the profile 41 at step S2.

At step S3, the subscription profile 41 is enabled. For example, a switch from the current profile 42 to the profile 41 can be requested by the user of the secure element 30. The enabling of the subscription profile 41 triggers the enabling of the patch 10 for the software package 20 in the secure element 30 at step S4. At this point, the patch 10 is applied when running the package 20 in the secure element 30.

In a further step S5, the profile 42 may be enabled again by a decision of the user. The disabling of the subscription profile 41 triggers the disabling of the patch 10 for the software package 20 in the secure element 30 at step S6. At this point, the patch 10 is not taken into account when running the package 20 in the secure element 30.

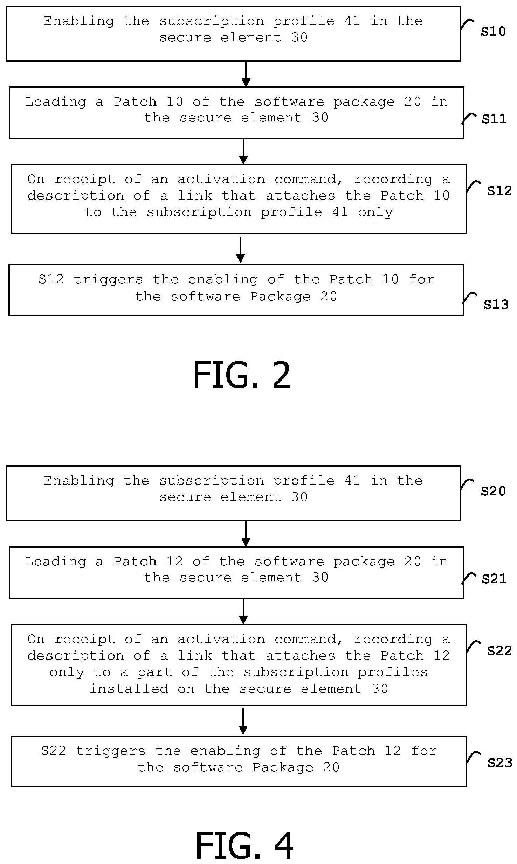

**Figure 2** shows a flow diagram of a patch management according to a second example of the invention.

Based on the secure element 30 presented at Figure 6, the subscription profile 41 is enabled at step S10.

At step S11, the patch 10 of the software package 20 is downloaded in the secure element 30. At this point the patch 10 remains disabled.

Then the administration server sends to the secure element 30 an activation command aiming at activating the patch only for the profile 41. On receipt of the activation command, the secure element 30 records a description of a link that attaches the patch 10 only to the profile 41 at step S12. Since the profile 41is the current subscription profile, the recording of the description of the link triggers the enabling of the patch 10 for the software package 20 in the secure element 30 at step S13. At this point, the patch 10 is applied when running the package 20 in the secure element 30.

It is to be noted that the patch 10 is automatically enabled on receipt of the activation command in this example.

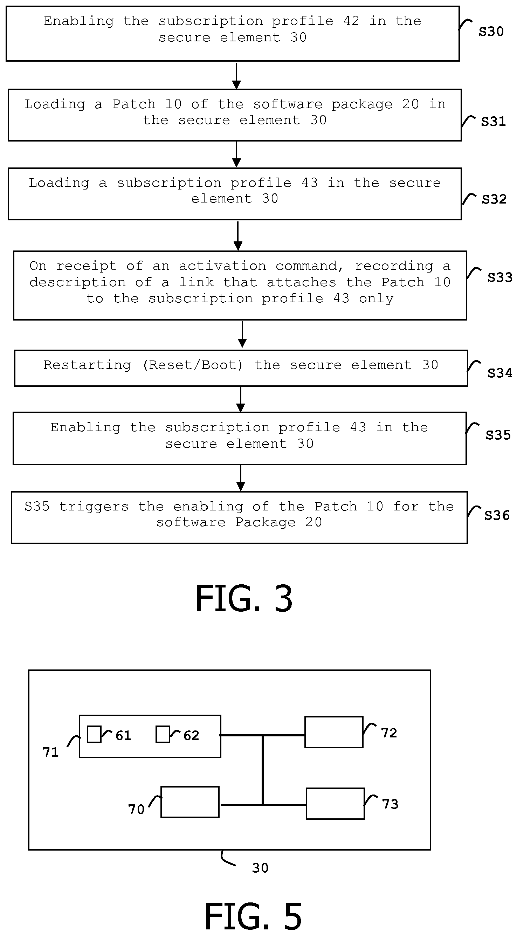

**Figure 3** shows a flow diagram of a patch management according to a third example of the invention.

Based on the secure element 30 presented at Figure 6, the subscription profile 42 is enabled at step S30.

At step S31, the patch 10 of the software package 20 is downloaded in the secure element 30. At this point the patch 10 still remains inactive.

At step S32, a new subscription profile 43 is downloaded and installed in the secure element 30. The profile 43 is declared as default profile for further boots of the secure element 30. For instance, the profile 43 may be a subscription to Telecom operator different from the Telecom operator managing the previous profiles 41 and 41.

On receipt of the activation command, the secure element 30 records a description of a link that attaches the patch 10 only to the profile 43 at step S33. Since the current profile is still the profile 42, the patch 10 is still not enabled.

Then at step 34, the secure element is restarted. For instance, a reboot of the secure element may be requested by the smartphone. Since the subscription profile 43 has been set as the default profile it becomes the current one in the secure element 30. Thus the profile 43 becomes enabled at step 35.

The enabling of the profile 43 automatically triggers the enabling of the patch 10 for the software package 20 in the secure element 30 at step S36. At this point, the patch 10 is applied when running the package 20 in the secure element 30.

It is to be noted that the profiles may be different from Telecom subscriptions. They may be Transport subscriptions allowing to access a transit network or a building or even banking subscriptions allowing to access payment services for example.

**Figure 4** shows a flow diagram of a patch management according to a third example of the invention.

Starting from the step S36 of Figure 3, the subscription profile 41 is now enabled at step S20. For instance a switch command may be send to the secure element 30 to request the enabling of the profile 41 in place of the current one.

At step S21, a new patch 12 of the software package 20 is downloaded in the secure element 30. At this point the new patch 12 is inactive. (i.e. disabled)

On receipt of a new activation command, the secure element 30 records a description of a link that attaches the patch 12 only to a part of the profiles installed on the secure element 30: namely subscription profiles 41 and 42 at step S22. The recording of the description of the link triggers the enabling of the patch 12 for the software package 20 in the secure element 30 at step S23. At this point, the patch 12 is applied when running the package 20 in the secure element 30 since the current subscription profile is profile 41. If a further switch to the profile 43 occurs, the patch 12 will remain enabled and the patch 10 will become enabled.

Alternatively, at step 22, the secure element 30 may record two descriptions of link: one related to the fact that patch 12 is attached to profile 41 and another related to the fact that patch 12 is attached to profile 43.

It is to be noted that the invention apply to any number of subscription profiles and any number of patch.

**Figure 7** shows schematically a configuration of a secure element according to an example of the invention.

The secure element 30 shown at Figure 7 corresponds to state of the secure element 30 after step S23 of Figure 4. The secure element 30 comprises three subscription profiles (41, 42 and 43) and two patches (10 and 12) of the package 20.

In a first embodiment, the secure element 30 may include a storage area 50 (shown in dotted line) which is common to all profiles. The storage area 50 aims at storing the description of existing links between patches and profiles.

In a second embodiment, each profile may include its own storage area (shown in dotted line) which is restricted to its profile. (i.e. storage area 51, respectively 52 and 53 restricted to the profile 41, respectively 42 and 43)

In a third embodiment, both a common storage area 50 and storage areas restricted to profiles may be combined.

The descriptions of the link between patch and profile are recorded either in the common storage area 50 or in storage areas restricted to each profile.

**Figure 5** shows schematically an architecture of a secure element according to an example of the invention

The secure element 30 includes a processor 70, a non-volatile memory 71 (ex: EEPROM or Flash), a working memory 72 (ex: RAM), and a physical communication interface 73 allowing to exchange data with other machines or entities. The non-volatile memory 71 comprises two software agents 61 and 62. The software agents 61 and 62 are intended to be run by the processor 70.

The secure element 30 comprise an operating system (not shown) which is configured to take into account the patches which are enabled when running the software package 20.

The software agent 61 is configured to record one or several descriptions of link that attache a patch only to a part of the subscription profiles installed on the secure element 30, on receipt of an activation command. Thus, the software agent 61 is designed to record either a single description of link related to several profiles or as many descriptions as attached subscription profiles. It is to be noted that there is at least one subscription profile which is not attached to the patch.

The software agent 62 is configured to enable a patch for a software package either as soon as the attached subscription profile 41 becomes enabled or as soon as the corresponding description is recorded if the attached subscription profile 41 is already enabled.

Preferably, the second agent 62 is adapted to disable a patch as soon as a subscription profile which is not attached to the patch becomes enabled.

The software agent 62 may be adapted to retrieve the description of the link from a storage area uniquely allocated to a target subscription profile. In this case, the software agent 62 has the relevant access rights to read the description from the storage area.

The software agent 62 may be adapted to retrieve the description of the link from a storage area 50 common to several subscription profiles.

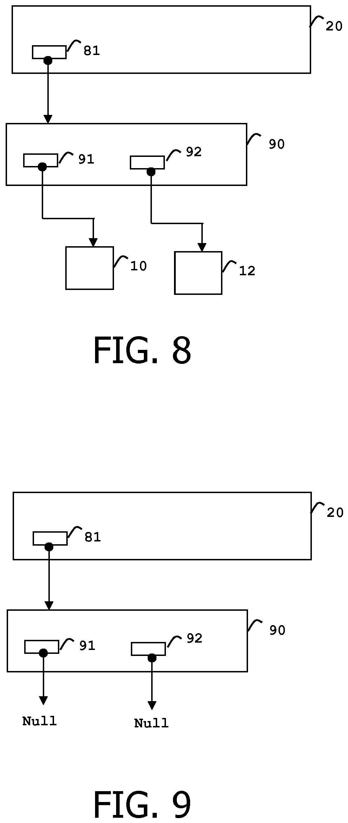

**Figure 8** depicts schematically an example of two patches enabled for the software package 20 according to the invention.

In this configuration, the current profile is a subscription profile which is attached to both patches 10 and 12.

The software package 20 comprises a pointer 81 to a Link Object 90 which is a new layer between the package 20 and its patches. In this example, the Link Object 90 comprises two pointers 91 and 92. The pointer 91 establishes a link to the patch 10 and the pointer 92 establishes a link to the patch 12. In this configuration both patches 10 and 12 apply to the software package 20 when running. Preferably, the operating system creates the pointer 81 at first patch enabling.

**Figure 9** depicts schematically an example of a software package without enabled patch according to the invention.

Starting from the example described at Figure 8, a switch to another subscription profile is performed so that the current profile is a subscription profile which is attached neither to patch 10 nor to patch 12.

The software package 20 remains unchanged and still comprises a pointer 81 to a Link Object 90. The Link Object 90 has been updated. It still comprises the pointers 91 and 92 which are set to "null". They may be set with any other value which do not correspond to a patch address. Thus the links between the package 20 and both patches 10 and 12 are broken. In this configuration both patches 10 and 12 do not apply to the software package 20 when running. The pointer 81 appears to be a permanent pointer because it remains unchanged whatever the enabled profile, while the pointers 91 and 92 appear to be dynamic since they are updated according to the current subscription profile.

The invention is well-suited for managing several patches enabled for a single software package. In particular, it allows to manage successive patches for a target package.

The invention allows dynamically taking into account the patches according to the current subscription profile. It allows to smoothly adapt the behavior of a package for a target subscription profile without impacting other profiles that reside on the secure element.

The invention allows preserving the performance both for memory consumption and execution time.

The invention is not limited to the described embodiments or examples. In particular, the secure element may comprises a plurality of packages for which several patches have been installed.

It is to be noted that the invention can apply to all packages which are intended to be used by several subscription profiles.

## Claims

1. A method for managing a patch (10) of a software package (20) in a secure element (30) comprising a first and a second subscription profiles (41, 42), said patch (10) being installed on the secure element (30), no more than one of said first and second subscription profiles (41, 42) being enabled at a time, the software package (20) being enabled independently of said first and second subscription profiles (41, 42),
**characterized in that** the method comprises the following steps:
- on receipt of an activation command, recording a description of a link that attaches the patch (10) only to said first subscription profile (41),
- enabling the patch (10) for said software package (20) either as soon as said first subscription profile (41) becomes enabled or as soon as said description is recorded if said first subscription profile (41) is already enabled.

2. A method according to claim 1, wherein the method comprises the further steps:
- enabling said second subscription profile (42),
- disabling the patch (10) only if the patch (10) is not attached to said second subscription profile (42), said disabling step being triggered by the step of enabling said second subscription profile (42).

3. A method according to claim 1 or 2, wherein the method comprises the step of installing a new patch (12) on the secure element (30) and the step of recording a second description of a second link that attaches the new patch (12) to said first subscription profile (41) only.

4. A method according to claim 1 or 2, wherein the method comprises the step of installing a third subscription profile (43) on the secure element (30), said installing step including a sub step of recording a third description of a third link that attaches the patch (10) to said third subscription profile (43).

5. A method according to claim 4, wherein the sub step of recording the third description of the third link is carried out by storing a link reference in a storage area (53) uniquely allocated to said third subscription profile (43).

6. A secure element (30) comprising a processor (70), a software package (20) and a patch (10) of the software package (20), the secure element (30) being intended to comprise a first and a second subscription profiles (41, 42), no more than one of said first and second subscription profiles (41, 42) being enabled at a time, the software package (20) being enabled independently of said first and second subscription profiles (41, 42),
**characterized in that** said secure element (30) comprises a first agent (61) adapted to be run by the processor (70) for, on receipt of an activation command, recording a description of a link that attaches the patch (10) only to said first subscription profile (41) and **in that** said secure element (30) comprises a second agent (62) adapted to be run by the processor (70) for enabling the patch (10) for said software package (20) either as soon as said first subscription profile (41) becomes enabled or as soon as said description is recorded if said first subscription profile (41) is already enabled.

7. A secure element (30) according to claim 6 wherein the second agent (62) is adapted to be run by the processor (70) for disabling the patch (10) as soon as said second subscription profile (42) becomes enabled and only if the patch (10) is not attached to said second subscription profile (42).

8. A secure element (30) according to claim 6 wherein the second agent (62) is adapted to retrieve the description of the link from a storage area uniquely allocated to the first subscription profile (41).

9. A secure element (30) according to claim 6 wherein the second agent (62) is adapted to retrieve the description of the link from a storage area (50) common to said first and second subscription profiles (41, 42).

10. A secure element (30) according to claim 6 wherein the secure element (30) comprises a Link Object (90), wherein the software package (20) includes a permanent pointer (81) to the Link Object (90) and wherein the Link Object (90) includes at least a dynamic pointer (91) which is set to point to the patch (10) only if the patch (10) is enabled for said software package (20).
